(19) **Europäisches Patentamt**
**European Patent Office**
**Office européen des brevets**

(11) **EP 4 403 439 B1**

(12) **EUROPEAN PATENT SPECIFICATION**

(45) Date of publication and mention
of the grant of the patent:
**08.04.2026 Bulletin 2026/15**

(51) International Patent Classification (IPC):
***B62D 5/04*** *(2006.01)* ***B62D 15/02*** *(2006.01)*

(21) Application number: **23216740.3**

(22) Date of filing: **14.12.2023**

(52) Cooperative Patent Classification (CPC):
**B62D 5/0457;** B62D 1/10; B62D 5/001;
B62D 15/0245; B62D 17/00

(54) **STEERING SYSTEM**

LENKSYSTEM

SYSTÈME DE DIRECTION

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **23.01.2023 JP 2023008048**

(43) Date of publication of application:
**24.07.2024 Bulletin 2024/30**

(73) Proprietor: **JTEKT CORPORATION**
**Kariya-shi, Aichi-ken, 448-8652 (JP)**

(72) Inventors:
• **NAGASHIMA, Yugo**
**Kariya-shi, Aichi-ken, 448-8652 (JP)**
• **KAJISAWA, Yuuta**
**Kariya-shi, Aichi-ken, 448-8652 (JP)**
• **ABE, Kenichi**
**Kariya-shi, Aichi-ken, 448-8652 (JP)**
• **YAMASHITA, Masaharu**
**Toyota-shi, Aichi-ken, 471-8571 (JP)**
• **TAKAYAMA, Shintaro**
**Toyota-shi, Aichi-ken, 471-8571 (JP)**
• **YAMASHITA, Yosuke**
**Toyota-shi, Aichi-ken, 471-8571 (JP)**
• **KATAYAMA, Hiroyuki**
**Toyota-shi, Aichi-ken, 471-8571 (JP)**
• **NAGASHIMA, Yugo**
**Kariya-shi, Aichi-ken, 448-8652 (JP)**

(74) Representative: **Winter, Brandl - Partnerschaft**
**mbB**
**Alois-Steinecker-Straße 22**
**85354 Freising (DE)**

(56) References cited:
FR-A1- 3 117 986 JP-A- 2022 018 938
US-A1- 2012 061 171 US-A1- 2018 141 584

EP 4 403 439 B1

**Description**

BACKGROUND ART

The following disclosure relates to a steering system of a steer-by-wire type.

A steer-by-wire steering system including a reaction force actuator that applies an operation reaction force to an operation member and a steering actuator that steers a wheel has been recently developed. In the steer-by-wire steering system, a power source of the steering actuator is controlled to lock a motion of the steering actuator in adjusting alignment of a wheel, as disclosed in Japanese Patent Application Publication No. 2022-18938, for instance. FR 3 117 986 A discloses a steer-by-wire system, in which the neutral position of the steering actuator is set and the neutral position of the steering actuator is hold. In US 2018 141584 A1, the steering wheel is disconnected during autonomous steering. US 2012 061 171 A1 discloses system of centering a steering rack in an automotive vehicle that has an electric power steering (EPS) assembly.

DESCRIPTION

Summary

When the motion of the steering actuator is locked, namely, when a motion position of the steering actuator is held, it is unclear in the steer-by-wire steering system described above at which motion position the steering actuator is locked. Further, there may be a situation in which a motion of the reaction force actuator is desirably locked in other steer-by-wire steering system. That is, the steer-by-wire steering system is still under development, and some modification can enhance the utility of the steer-by-wire steering system. Accordingly, an aspect of the present disclosure relates to a steer-by-wire steering system having high utility.

In one aspect of the present disclosure, a steer-by-wire steering system for a vehicle includes: a reaction force actuator to which an operation member is connected such that the reaction force actuator is moved by the operation member, the reaction force actuator including a power source by which the reaction force actuator applies an operation reaction force to the operation member; a steering actuator to which a wheel is connected, the steering actuator including a power source by which the steering actuator steers the wheel; and a controller configured to control the reaction force actuator and the steering actuator. The controller is configured to execute, for each of the reaction force actuator and the steering actuator, a neutral position setting processing of setting a neutral position in a motion range and a motion position hold processing of holding a motion position at the neutral position by the power source, wherein, in a state in which an operation terminal is connected to the controller, the controller executes the neutral position setting processing and the motion position hold processing based on a signal from the operation terminal, the operation terminal includes an actuator selecting switch to select for which one of the reaction force actuator and the steering actuator the processing is executed.

In the steer-by-wire steering system (hereinafter referred to as "steer-by-wire system" where appropriate) according to the present disclosure, the motion position hold processing may be executed for each of the steering actuator and the reaction force actuator. Here, any one of the reaction force actuator and the steering actuator for which the motion position hold processing is executed is referred to as a "target actuator". In the steer-by-wire system of the present disclosure, not only the motion position hold processing is executed for the target actuator but also the neutral position setting processing is executed for the target actuator, in addition to the neutral position setting processing. Thus, the steer-by-wire system enables the motion position of the target actuator to be easily held at the neutral position.

Various Forms

In the steer-by-wire system of the present disclosure, the "operation member" is operated by a driver of the vehicle, and the operation member is typically a steering wheel. The operation member may be a joystick or the like. The "reaction force actuator" applies, to the operation member, an operation reaction force by the power source. It is desirable that the reaction force actuator can positively move the operation member by the power source. The "steering actuator" may steer right and left wheels together or may steer only one wheel. Where it is not necessary to distinguish the reaction force actuator and the steering actuator from each other in the following description, a general term "actuator" will be used to refer to the reaction force actuator or the steering actuator. The "controller" is constituted by a computer including a CPU, a ROM, a RAM, etc., and drivers (drive circuits) of the power sources of the reaction force actuator and the steering actuator. The controller may be constituted by two controllers that individually control the steering actuator and the reaction force actuator and that communicate with each other, so as to function as one controller.

The actuator of the steer-by-wire system of the present disclosure may include the "movable member" moved by the driver of the vehicle or by the power source. In a case where the actuator is the reaction force actuator, the movable member is typically a steering shaft to one end of which the steering wheel is attached such that the steering shaft rotates with the steering wheel, for instance. In a case where the actuator is the steering actuator that steers the right and left wheels together, the movable member is typically a steering rod (rack bar) that connects the right and left wheels and that moves in the right-left direction, for instance. The "motion position" of the actuator may be considered as a position of the movable member (that is a concept including "rotational position", i.e., "rotational phase"). In other words, it may be considered that the movable member moves in accordance with the motion position of the actuator. The "neutral position" may be considered as the motion position that should be maintained when the vehicle travels straight, for instance.

The "motion range" of the actuator is considered as the motion range of the movable member. For defining one and the other ends of the motion range, the actuator is desirably provided with a pair of stoppers configured to stop the movable member, specifically, part of the movable member. In a case where the actuator includes the stoppers, the "neutral position setting processing" is executed as follows. That is, the controller obtains the motion position of the movable member corresponding to the one end and the motion position of the movable member corresponding to the other end by moving the movable member by the power source of the target actuator such that the movable member is stopped by the stoppers. The controller then sets a position middle between the motion positions as the neutral position.

The "power source" of the actuator moves the movable member and may be referred to as a drive source. Though the power source may be a hydraulic device, an electric motor is typically employed as the power source, for instance. In a case where the power source is the electric motor, the "motion position hold processing" described above is executed such that a current for holding the motion position of the target actuator at the neutral position is kept supplied to the electric motor of the target actuator.

In a case where the target actuator is the reaction force actuator, the motion position hold processing may be executed in a connecting work of connecting the operation member to the actuator. In a case where the operation member is a handle (such as a steering wheel) and the movable member is the steering shaft to which the handle is connected, the handle can be connected to the steering shaft at an appropriate angular position. In a case where the target actuator is the steering actuator, the motion position hold processing may be executed in an adjusting work of adjusting alignment of the wheel (such as adjusting a toe angle) connected to the actuator. This enables wheel alignment to be appropriately adjusted in a state in which the steering actuator is maintained at the neutral position.

In an ordinary steering system that is not the steer-by-wire type, the operation of the operation member and the steering of the wheel are mechanically in conjunction with each other. Thus, the neutral position setting processing is executed for only one of the operation member and the wheel. Because the steering system of the present disclosure is the steer-by-wire steering system, the reaction force actuator and the steering actuator are not mechanically connected. In view of this, the neutral position setting processing and the motion position hold processing are executed for each of the reaction force actuator and the steering actuator, which are the target actuators.

The neutral position setting processing and the motion position hold processing are executed based on a signal from the "operation terminal" such as an operation device or a command transmitter in a state in which the operation terminal is connected to the controller in the vehicle. For instance, the connecting work of connecting the operation member or the adjustment of the wheel alignment should be performed at assembly factories of the vehicle or repair factories of dealers and should not be performed by the user of the vehicle. The neutral position setting processing and the motion position hold processing cannot be executed without using the operation terminal, so that the vehicle's user is not permitted to execute the processings. In a case where the operation terminal has a wireless communication function, the execution of the processings can be remotely controlled.

In utilizing the operation terminal, when the motion position hold processing is being executed, a signal indicating that the motion position hold processing is being executed is desirably transmitted to the operation terminal. For instance, when the connecting work of the operation member or the adjustment of the toe angle of the wheel is executed, the worker can recognize from the operation terminal that the motion position of the target actuator is held at the neutral position.

Brief Description of the Drawings

The objects, features, advantages, and technical and industrial significance of the present disclosure will be better understood by reading the following detailed description of an embodiment, when considered in connection with the accompanying drawings, in which:

Fig. 1 is a view illustrating an overall configuration of a steering system according to one embodiment of the present disclosure;
Fig. 2 is a flowchart of a steering control program executed in the steering system of the embodiment;
Fig. 3 is a flowchart of a reaction force control program executed in the steering system of the embodiment;
Fig. 4A is a view schematically illustrating stoppers for defining a motion range of a reaction force actuator;
Fig. 4B is a view schematically illustrating stoppers for defining a motion range of a steering actuator;
Fig. 5A is a schematic view for explaining appropriate attachment of a handle;
Fig. 5B is a schematic view for explaining appropriate adjustment of a toe angle of wheels;

Fig. 6 is a flowchart of a neutral position setting processing program executed for the reaction force actuator;
Fig. 7 is a flowchart of a motion position hold processing program executed for the reaction force actuator;
Fig. 8 is a flowchart of a neutral position setting processing program executed for the steering actuator; and
Fig. 9 is a flowchart of a motion position hold processing program executed for the steering actuator.

Embodiment

Referring to the drawings, there will be described below in detail a steer-by-wire steering system according to one embodiment of the present disclosure. It is to be understood that the present disclosure is not limited to the details of the following embodiment but may be changed and modified based on the knowledge of those skilled in the art.

1. Overall Configuration of Steering System

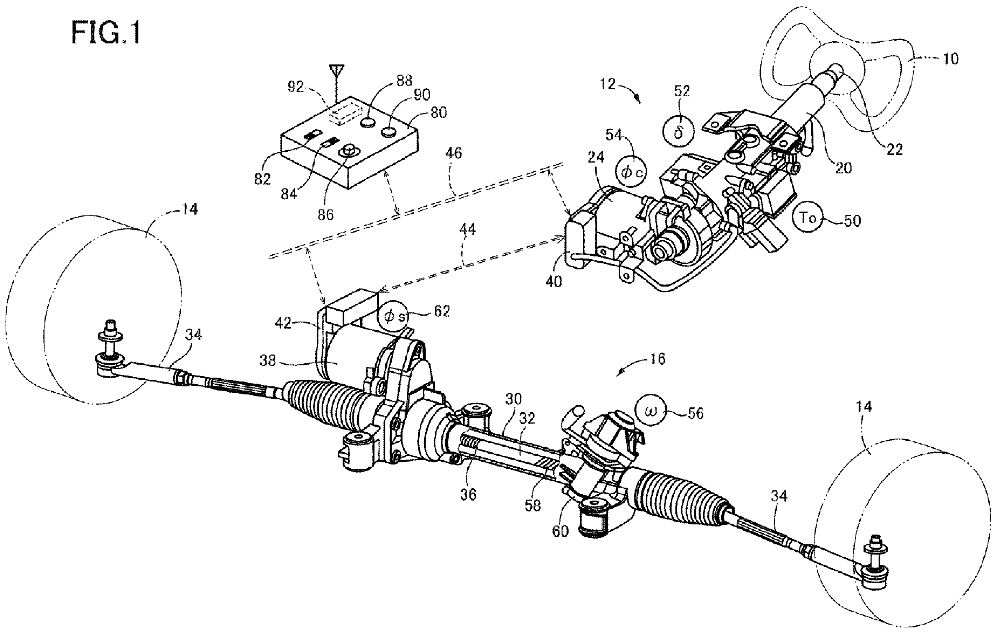

The steering system according to the present embodiment is a steer-by-wire steering system capable of steering wheels without depending on an operation force applied to an operation member by a driver. As illustrated in Fig. 1, the steering system includes a reaction force actuator 12 to which a handle 10 is connected and a steering actuator 16 to which right and left wheels 14 are connected to steer them together. The handle 10 functions as the operation member. Here, the handle 10 has a shape obtained by deforming the steering wheel. The handle 10 is rotated by the driver. The reaction force actuator 12 receives the rotational operation of the handle 10 and applies, with respect to the handle 10, namely, with respect to the operation of the handle 10, a reaction force (hereinafter referred to as an "operation reaction force" where appropriate) against the operation of the handle 10.

The reaction force actuator 12 includes: a steering column 20 supported by a reinforcement of an instrument panel; a steering shaft 22 rotatably held by the steering column 20; and a reaction force motor 24, which is an electric motor, for applying a rotational torque to the steering shaft 22 via a power transmission mechanism. The handle 10 is attached to a rear end portion of the steering shaft 22. Though not explained in detail, the power transmission mechanism includes a worm attached to a motor shaft of the reaction force motor 24 and a worm wheel attached to the steering shaft 22 and meshing the worm. The reaction force motor 24 is a three-phase brushless DC motor and functions as a power source of the reaction force actuator 12. Owing to the torque generated by the reaction force motor 24, a reaction force torque as the operation reaction force is applied to the handle 10 connected to the steering shaft 22. The steering shaft 22 functions as a movable member of the reaction force actuator 12.

The steering actuator 16 includes: a generally cylindrical housing 30 supported by a chassis in a posture extending in the right-left direction; a steering rod 32 supported by the housing 30 so as to be unrotatable and movable in the right-left direction; and a pair of tie rods 34 connected to right and left ends of the steering rod 32 via respective ball joints. One end of each tie rod 34 is connected to the corresponding wheel 14 via the ball joint. Specifically, the tie rod 34 is connected, via the ball joint, to a knuckle arm of a steering knuckle that rotatably holds the wheel 14 and that is held by a suspension arm so as to be turnable.

A threaded groove 36 is formed on the steering rod 32. Though not illustrated, a nut holding bearing balls and threadedly engaging the threaded groove 36 is held in the housing 30 such that the nut is rotatable and immovable in the right-left direction. That is, a ball screw mechanism is constituted by the steering rod 32 and the nut. A steering motor 38, which is an electric motor, is attached to the housing 30. The steering motor 38 rotates the nut via a power transmission mechanism. Though not illustrated, the power transmission mechanism includes a pulley attached to the motor shaft of the steering motor 38 and a timing belt looped over the pulley and the outer circumference of the nut. The steering motor 38 is a three-phase brushless DC motor and functions as a power source of the steering actuator 16. When the steering motor 38 is rotated, the steering rod 32 is moved rightward and leftward, so that the right and left wheels 14 are steered together. The steering rod 32 functions as a movable member of the steering actuator 16.

The reaction force actuator 12 is controlled by a reaction force electronic control unit (hereinafter referred to as a "reaction force ECU" where appropriate) 40 attached to the reaction force motor 24. The reaction force ECU 40 is constituted by a computer including a CPU, a ROM, a RAM, etc., and an inverter that is a driver (drive circuit) of the reaction force motor 24. The reaction force ECU 40 is powered by a battery. Similarly, the steering actuator 16 is controlled by a steering electronic control unit (hereinafter referred to as a "steering ECU" where appropriate) 42 attached to the steering motor 38. The steering ECU 42 is constituted by a computer including a CPU, a ROM, a RAM, etc., and an inverter that is a driver (drive circuit) of the steering motor 38. The steering ECU 42 is powered by the battery.

The reaction force ECU 40 and the steering ECU 42 cooperate with each other to constitute one controller of the present steering system. The reaction force ECU 40 and the steering ECU 42 are connected via a dedicated high-speed communication line 44. Both the reaction force ECU 40 and the steering ECU 42 are connected to a CAN (car area network or controllable area network) 46 of the vehicle.

The reaction force actuator 12 includes, as a constituent element relating to the control, an operation torque sensor 50. Though not explained in detail, the operation torque sensor 50 detects a torsional amount of the steering shaft 22 to thereby detect an operation torque To, which is the operation force applied to the handle 10 by the driver. Further, the reaction force actuator 12 includes an operation angle sensor 52 configured to detect a rotational angle of the steering shaft 22 to thereby detect an operation angle $\delta$ of the handle 10 and a reaction force motor rotational angle sensor 54 configured to detect a rotational angle (rotational phase) $\varphi c$ of the reaction force motor 24 for phase switching.

A steering angle $\omega$ of the wheels 14 and the positon of the steering rod 32 in the right-left direction have a specific relationship. The steering actuator 16 includes a steering angle sensor 56 configured to detect the position of the steering rod 32 for detecting the steering angle $\omega$ of the wheels 14. Briefly, a rack 58 is formed on the steering rod 32, and a pinion shaft 60 engaging the rack 58 is held by the housing 30. The steering angle sensor 56 detects the rotational angle of the pinion shaft 60 to thereby detect an amount of the movement of the steering rod 32 in the right-left direction, and so that the steering angle $\omega$ of the wheels 14 is detected. The steering actuator 16 includes a steering motor rotational angle sensor 62 configured to detect a rotational angle (rotational phase) $\varphi s$ of the steering motor 38 for phase switching.

2. Basic Control of Steering System

In the present steering system, the steering ECU 42 executes a steering control for steering the wheels 14, and the reaction force ECU 40 executes a reaction force control for applying, to the handle 10, the reaction force torque that is the operation reaction force. The steering control and the reaction force control will be hereinafter described.

(a) Steering Control

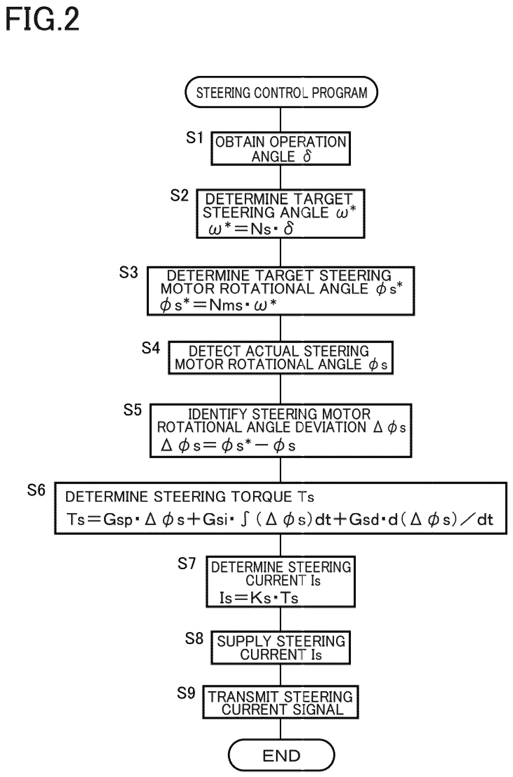

In the steering control, the steering ECU 42 causes the steering actuator 16 to steer the wheels 14 at the steering angle $\omega$ corresponding to the operation angle $\delta$. The computer of the steering ECU 42 repeatedly executes a steering control program represented by a flowchart of Fig. 2 at a short time pitch of from several to several tens of milliseconds, so that the steering control is executed. Referring to the flowchart, the steering control will be described. For easier understanding, the operation angle $\delta$ will be referred to as "the operation angle $\delta$ of the handle 10" where appropriate.

In the processing according to the steering control program, the steering ECU 42 obtains the operation angle $\delta$ of the handle 10 from the reaction force ECU 40 via the dedicated high-speed communication line 44 at Step 1. (Hereinafter, Step 1 is abbreviated as "S1". Other steps will be similarly abbreviated.) The operation angle $\delta$ is obtained as a motion position of the reaction force actuator 12, namely, as a rotational angular position of the steering shaft 22, which is the movable member. The motion position of the reaction force actuator 12 is defined with respect to a neutral position, namely, with respect to a motion position at which the reaction force actuator 12 should be located when the vehicle is in a straight traveling state. As later explained in detail, the reaction force ECU 40 identifies, as the operation angle $\delta$, a displacement angle of the steering shaft 22 from the neutral position (neutral angular position) based on the motor rotational angle $\varphi c$ of the reaction force motor 24. The reaction force ECU 40 transmits a signal of the operation angle $\delta$ to the steering ECU 42 via the dedicated high-speed communication line 44. The steering ECU 42 obtains the operation angle $\delta$ based on the signal.

At S2, the steering ECU 42 determines a target steering angle $\omega^*$ that is the steering angle $\omega$ at which the wheels 14 should be steered, based on the obtained operation angle $\delta$. Like the operation angle $\delta$, the steering angle $\omega$ is obtained as a motion position of the steering actuator 16, namely, as a position of the steering rod 32, which is the movable member. The motion position of the steering actuator 16 is defined with respect to a neutral position, namely, with respect to a motion position at which the steering actuator 16 should be located when the vehicle is in the straight traveling state. Based on the detection of the steering angle sensor 56, the steering ECU 42 detects, as the steering angle $\omega$, a movement amount of the steering rod 32 from the neutral position, namely, a displacement angle of the pinion shaft 60 from a neutral angular position.

The operation angle $\delta$ and the steering angle $\omega$ have a relationship that satisfies a set steering gear ratio Ns. Accordingly, the target steering angle $\omega^*$ is determined at S2 according to the following expression:

$$\omega^* = Ns \cdot \delta$$

The steering gear ratio Ns may be fixed or may be variable depending on a vehicle speed, for instance.

The steering angle $\omega$ and the steering motor rotational angle $\varphi s$ have a relationship that satisfies a predetermined gear ratio Nms. Thus, the steering control is executed based on the steering motor rotational angle $\varphi s$ in view of detection accuracy. At S3, the steering ECU 42 determines, according to the following expression, a target steering motor rotational angle $\varphi s^*$, which is a control target of the steering motor rotational angle $\varphi s$:

$$\phi s^* = Nms \cdot \omega^*$$

The steering angle sensor 56 can detect an absolute angle. Even if the ignition switch is once turned off, the steering angle sensor 56 can detect the steering angle ω with respect to the neutral position when the ignition switch is subsequently turned on. The steering ECU 42 of the present steering system performs calibration of the steering motor rotational angle φs detected by the steering motor rotational angle sensor 62 based on the steering angle ω detected by the steering angle sensor 56, every time the ignition switch is turned on. The steering motor rotational angle sensor 62 can detect the steering motor rotational angle φs only within 360°, namely, the rotational phase of only one rotation. The steering ECU 42, however, detects the steering motor rotational angle φs beyond 360° by cumulative processing.

At S4, the steering ECU 42 causes the steering motor rotational angle sensor 62 to detect the steering motor rotational angle φs at the present time point. At S5, the steering ECU 42 identifies, according to the following expression, a steering motor rotational angle deviation Δφs, which is a deviation of the steering motor rotational angle φs at the present time point with respect to the target steering motor rotational angle φs*:

$$\Delta \phi s = \phi s^{*} - \phi s$$

At S6, the steering ECU 42 determines a torque to be generated by the steering motor 38, i.e., a steering torque Ts to be generated by the steering actuator 16, based on the steering motor rotational angle deviation Δφs according to the PID feedback control law, namely, according to the following expression:

$$Ts = Gsp \cdot \Delta \phi s + Gsi \cdot \int (\Delta \phi s)\ dt + Gsd \cdot d\ (\Delta \phi s) / dt$$

In the above expression, "Gsp", "Gsi", and "Gsd" are a proportional term gain, an integral term gain, and a derivative term gain, respectively.

The steering torque Ts and a steering current Is to be supplied to the steering motor 38 as the power source are generally proportional to each other. Thus, at S7, the steering ECU 42 determines the steering current Is utilizing a current determining coefficient Ks based on the steering torque Ts according to the following expression:

$$Is = Ks \cdot Ts$$

The thus determined steering current Is is supplied at S8 from the inverter to the steering motor 38. At S9, the steering ECU 42 transmits a signal of the steering current Is to the reaction force ECU 40 via the dedicated high-speed communication line 44 for use in the reaction force control that will be later described. Thus, one execution of the steering control program is ended.

(b) Reaction Force Control

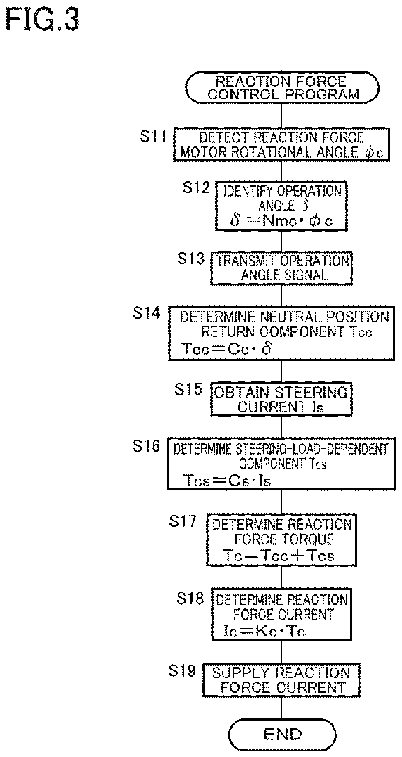

In the reaction force control, the reaction force ECU 40 causes the reaction force actuator 12 to apply, to the handle 10, a reaction force torque, as the reaction force, against the operation of the handle 10, for giving the driver an appropriate steering operation feeling or for returning the handle 10 to the neutral position. The computer of the reaction force ECU 40 repeatedly executes a reaction force control program represented by a flowchart of Fig. 3 at a short time pitch of from several to several tens of milliseconds, so that the reaction force control is executed. Referring to the flowchart, the reaction force control will be described.

In the processing according to the reaction force control program, at S11, the reaction force ECU 40 causes the reaction force motor rotational angle sensor 54 to detect a motor rotational angle φc of the reaction force motor 24. Because the operation angle δ and the reaction force motor rotational angle φc have a relationship that satisfies a predetermined gear ratio Nmc, the reaction force control is executed based on the reaction force motor rotational angle φc in view of detection accuracy. At S12, the reaction force ECU 40 identifies the operation angle δ based on the reaction force motor rotational angle φc according to the following expression:

$$\delta = Nmc \cdot \varphi c$$

The operation angle sensor 52 can detect an absolute angle. Even if the ignition switch is once turned off, the operation angle sensor 52 can detect the operation angle δ when the ignition switch is subsequently turned on. The reaction force ECU 40 of the present steering system performs calibration of the reaction force motor rotational angle φc detected by the reaction force motor rotational angle sensor 54 based on the operation angle δ detected by the operation angle sensor 52, every time the ignition switch is turned on. The reaction force motor rotational angle sensor 54 can detect the reaction force motor rotational angle φc only within 360°, namely, the rotational phase of only one rotation. The reaction force ECU 40 however, detects the reaction force motor rotational angle φc beyond 360° by a cumulative processing. At S13, the reaction force ECU 40 transmits a signal of the identified operation angle δ to the steering ECU 42 via the dedicated high-speed communication line 44 for use in the steering control.

The reaction force torque Tc is composed of two components, namely, a neutral position return component Tcc for returning the motion position of the reaction force actuator 12, i.e., the handle 10, to the neutral position and a steering-load-dependent component Tcs for simulating the load of the steering actuator 16. At S14, the reaction force ECU 40 determines the neutral position return component Tcc according to the following expression utilizing a neutral position return component determining coefficient Cc:

$$\mathrm{Tcc} = \mathrm{Cc} \cdot \delta$$

According to the above expression, the neutral position return component Tcc is determined such that the greater the operation angle δ, the greater the reaction force torque Tc for returning the handle 10 to the neutral position.

The load of the steering actuator 16 is considered to be generally proportional to the steering current Is being supplied to the steering motor 38. At S15, the reaction force ECU 40 obtains the steering current Is based on the signal transmitted from the steering ECU 42. At S16, the reaction force ECU 40 determines the steering-load-dependent component Tcs according to the following expression utilizing a steering-load-dependent component determining coefficient Cs:

$$\mathrm{Tcs} = \mathrm{Cs} \cdot \mathrm{Is}$$

According to the above expression, the steering-load-dependent component Tcs is determined such that the greater the steering current Is, namely, the greater the load of the steering actuator 16, the greater the reaction force torque Tc that is applied to the handle 10.

Based on the neutral position return component Tcc and the steering-load-dependent component Tcs determined as described above, the reaction force ECU 40 determines at S17 the reaction force torque Tc according to the following expression:

$$\mathrm{Tc} = \mathrm{Tcc} + \mathrm{Tcs}$$

The reaction force torque Tc and the reaction force current Ic supplied to the reaction force motor 24 as the power source are generally proportional to each other. At S18, the reaction force ECU 40 determines the reaction force current Ic utilizing a reaction force current determining coefficient Kc based on the reaction force torque Tc according to the following expression:

$$\mathrm{Ic} = \mathrm{Kc} \cdot \mathrm{Tc}$$

The thus determined reaction force current Ic is supplied at S19 from the inverter to the reaction force motor 24. Thus, one execution of the reaction force control program is ended.

3. Motion Range and Neutral Position of Actuators

The reaction force actuator 12 has a motion range for the steering operation in the right-left direction, and the steering actuator 16 has a motion range for the wheel steering motion in the right-left direction. The middle of the motion range, namely, the positon right middle of the motion range, is set as the neutral position. Hereinafter, the motion range and the neutral position of each of the reaction force actuator 12 and the steering actuator 16 will be described.

(a) Motion range and Neutral Position of Reaction Force Actuator

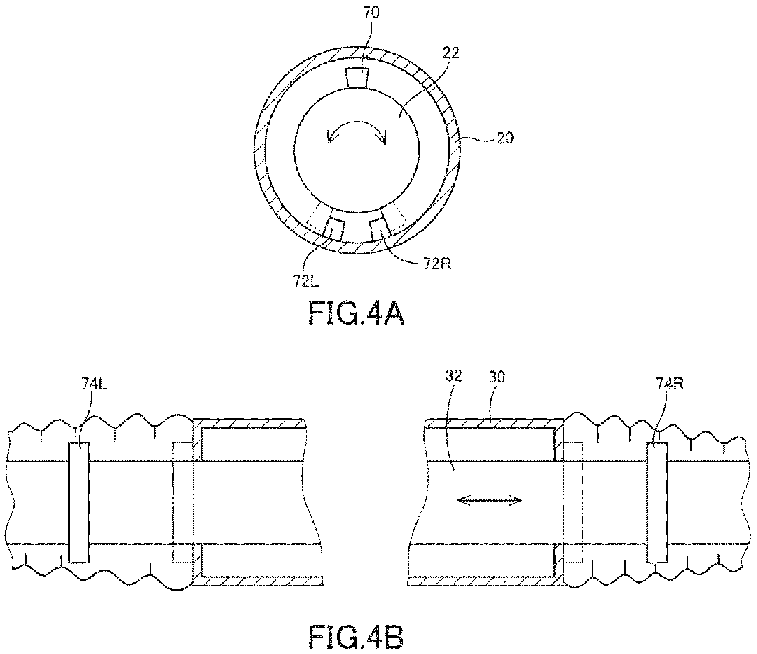

Fig. 4A is a schematic view of the reaction force actuator 12 viewed in the axial direction. As illustrated in Fig. 4A, the steering shaft 22 as the movable member of the reaction force actuator 12 is provided with a protrusion 70, and the steering column 20 is provided with a pair of stoppers 72R, 72L for stopping the protrusion 70. As indicated by the long dashed double-short dashed line, when the steering shaft 22 is rotated and the protrusion 70 is stopped by the stopper 72R, the rotational position of the steering shaft 22 is located at one end, i.e., a right-side end, of the motion range of the reaction force actuator 12. When the steering shaft 22 is rotated and the protrusion 70 is stopped by the stopper 72L, the rotational position of the steering shaft 22 is located at the other end, i.e., a left-side end, of the motion range of the reaction force actuator 12. It is noted that an end of the motion range when the vehicle turns to the right corresponds to the right-side end and an end of the motion range when the vehicle turns to the left corresponds to the left-side end.

The one end and the other end of the motion range are defined as described above. In the steering system, therefore, the motion range of the reaction force actuator 12 is less than 360°. The state in which the protrusion 70 is located at the position indicated by the solid line in Fig. 4A corresponds to a state in which the motion position of the reaction force actuator 12 is the middle of the motion range, namely, a state in which the motion position of the reaction force actuator 12 is the neutral position. The neutral position is the motion position of the reaction force actuator 12 that should be maintained in the straight traveling state of the vehicle.

(b) Motion Range and Neutral Position of Steering Actuator

Fig. 4B schematically illustrates part of a right-side portion and part of a left-side portion of the steering actuator 16. As illustrated in Fig. 4B, the steering rod 32 (the movable member) of the steering actuator 16 is provided with rings 74R, 74L at respective portions of the steering rod 32 extending from the housing 30. When the steering rod 32 is moved rightward to a certain extent as indicated by the long dashed double-short dashed line, the ring 74L comes into contact with a left end of the housing 30, so that the steering rod 32 is prohibited from moving rightward. In this state, the motion position of the steering rod 32 corresponds to one end, i.e., a right-side end, of the motion range of the steering actuator 16. When the steering rod 32 is moved leftward to a certain extent as indicated by the long dashed double-short dashed line, the ring 74R comes into contact with a right end of the housing 30, so that the steering rod 32 is prohibited from moving leftward. In this state, the motion position of the steering rod 32 corresponds to the other end, i.e., a left-side end, of the motion range of the steering actuator 16. In this way, the one end and the other end of the motion range are defined. As described above with respect to the reaction force actuator 12, an end of the motion range when the vehicle turns to the right corresponds to the right-side end, and an end of the motion range when the vehicle turns to the left corresponds to the left-side end.
The state in which each ring 74R, 74L is located at the position indicated by the solid line in Fig. 4B corresponds to a state in which the motion position of the steering actuator 16 is the middle of the motion range, i.e., a state in which the motion position of the steering actuator 16 is the neutral position. The neutral position is the motion position of the steering actuator 16 that should be maintained in the straight traveling state of the vehicle. The right end and the left end of the housing 30 with which the rings 74R, 74L respectively come into contact function as a pair of stoppers for stopping the rings 74R, 74L.

4. Connection of Operation Member and Adjustment of Toe Angle of Wheels

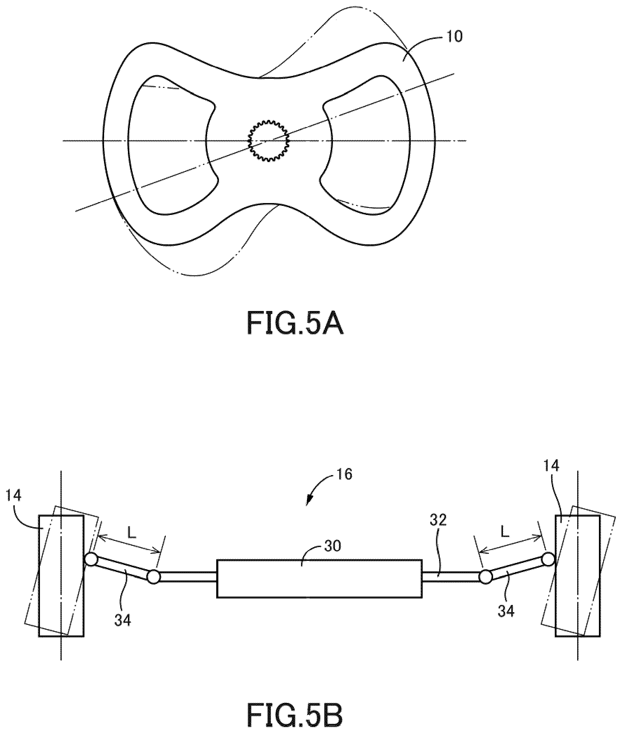

As schematically illustrated in Fig. 5A, the handle 10, which is the operation member, needs to take a proper posture when the motion position of the reaction force actuator 12 is the neutral position. In other words, the handle 10 needs to be in a horizontal posture when the rotational position of the steering shaft 22 is the neutral position.
The handle 10 is attached to the steering shaft 22 by serration engagement, and the posture of the handle 10 with respect to the steering shaft 22 cannot be changed after the handle is attached. If the motion position of the reaction force actuator 12 is not the neutral position even though the handle 10 is attached in a horizontal posture, the handle 10 may take an inclined posture as indicated by the long dashed double-short dashed line when the motion position of the reaction force actuator 12 returns to the neutral position. Thus, the handle 10 is desirably connected to the reaction force actuator 12 when the motion position of the reaction force actuator 12 is held at the neutral position.
It is desirable that the toe angle of the wheels 14 be desirably substantially 0° as schematically illustrated in Fig. 5B when the vehicle is traveling straight. The toe angle of the wheels 14 is adjusted by adjusting a tie rod length L of each tie rod 34 after the steering actuator 16 is mounted on the vehicle body. The toe angle is adjusted by a known method, a description of which is dispensed with.
If the motion position of the steering actuator 16 is not the neutral position when the toe angle is adjusted, the toe angle of the wheels 14 may considerably deviate from 0° as indicated by the long dashed double-short dashed line in Fig. 5B when the motion position of the steering actuator 16 returns to the neutral position. Like the connection of the handle 10, the adjustment of the toe angle of the wheels 14 is desirably performed when the motion position of the steering actuator 16 is held at the neutral position.

5. Neutral Position Setting Processing and Motion Position Hold Processing

In the present steering system, the neutral position is set for each of the reaction force actuator 12 and the steering actuator 16. The motion position of the reaction force actuator 12 is held at the neutral position when the handle 10 is attached to the steering shaft 22, and the motion position of the steering actuator 16 is held at the neutral position when the toe angle of the wheels 14 is adjusted.
Processing for setting the neutral position (hereinafter referred to as "neutral position setting processing" where appropriate) is executed by execution of a neutral position setting processing program by the reaction force ECU 40 or the steering ECU 42. Processing for holding the motion position of the reaction force actuator 12 or the steering actuator 16 at the neutral position (hereinafter referred to as "motion position hold processing" where appropriate) is executed by execution of a motion position setting program by the reaction force ECU 40 or the steering ECU 42. The setting of the neutral position, the attachment of the handle 10, and the adjustment of the toe angle of the wheels 14 are performed in vehicle manufacturing process or maintenance at dealers of the vehicle and should not be performed by the vehicle user. In the present steering system, the neutral position setting processing and the motion position hold processing are executed in a state in which an operation terminal 80 is connected as illustrated in Fig. 1, based on a start signal from the operation terminal 80. The operation terminal 80 transmits the start signal to the reaction force ECU 40 or the steering ECU 42 via the CAN 46.

Hereinafter, the neutral position setting processing and the motion position hold processing executed for the reaction force actuator 12, and the neutral position setting processing and the motion position hold processing executed for the steering actuator 16 will be explained in this order. In the following explanation, the neutral position setting processing and the motion position hold processing are executed independently of each other for each of the reaction force actuator 12 and the steering actuator 16. The neutral position setting processing and the motion position hold processing may be successively executed.

The operation terminal 80 includes an actuator selecting switch 82 to select for which one of the reaction force actuator 12 and the steering actuator 16 the processing is executed, a processing selecting switch 84 to select which one of the neutral position setting processing and the motion position hold processing is executed, a start/completion switch 86 to start or complete the processing, a neutral position setting completion indicator 88 to indicate completion of the neutral position setting processing, and a motion position hold indicator 90 to indicate that the motion position is held at the neutral position. Basically, the neutral position setting processing and the motion position hold processing start to be executed for both the reaction force actuator 12 and the steering actuator 16 by a worker's operation of the operation terminal 80. The operation terminal 80 includes a wireless communication device 92, and the processings can be executed based on an external command via wireless communication.

(a) Processings for Reaction Force Actuator

i) Neutral Position Setting Processing

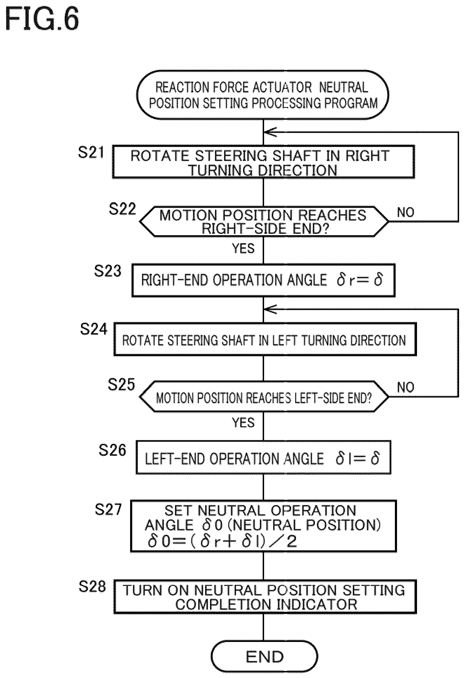

The neutral position setting processing for the reaction force actuator 12 is executed in a state in which the handle 10 is not attached to the steering shaft 22, for instance. The neutral position setting processing is executed such that the reaction force ECU 40 executes a neutral position setting processing program of a flowchart of Fig. 6, triggered by the worker's operation of the operation terminal 80. In the neutral position setting processing, the reaction force motor 24 functions not as the power source for applying the operation reaction force to the handle 10 but as the power source for positively rotating the steering shaft 22.

In the processing according to the neutral position setting processing program, at S21, the reaction force ECU 40 supplies a current to the reaction force motor 24 to rotate the steering shaft 22 in a direction in which the vehicle turns to the right. At S22, when the protrusion 70 is stopped by the stopper 72R and it is accordingly determined that the rotation of the steering shaft 22 is prohibited, namely, when it is determined that the motion position of the reaction force actuator 12 reaches the right-side end of the motion range, the control flow proceeds to S23 at which the reaction force ECU 40 sets the operation angle $\delta$ detected by the operation angle sensor 52 as a right-end operation angle $\delta r$.

At S24, the reaction force ECU 40 supplies a current in the opposite direction to the reaction force motor 24 to rotate the steering shaft 22 in a direction in which the vehicle turns to the left. At S25, when the protrusion 70 is stopped by the stopper 72L and it is accordingly determined that the rotation of the steering shaft 22 is prohibited, namely, when the motion position of the reaction force actuator 12 is located at the left-side end of the motion range, the control flow proceeds to S26 at which the reaction force ECU 40 sets the operation angle $\delta$ detected by the operation angle sensor 52 as a left-end operation angle $\delta l$.

At S27, the reaction force ECU 40 sets, as a neutral operation angle $\delta 0$, the operation angle $\delta$ middle between the right-end operation angle $\delta r$ and the left-end operation angle $\delta l$, according to the following expression:

$$\delta 0 = (\delta r + \delta l) / 2$$

The neutral operation angle $\delta 0$ is the neutral position of the motion range of the reaction force actuator 12. Based on the setting, calibration of the operation angle $\delta$ is performed. The operation angle $\delta$, which is based on the neutral operation angle $\delta 0$, is thereafter used. After the setting of the neutral operation angle $\delta 0$ is ended, namely, after the setting of the neutral position is ended, the reaction force ECU 40 turns on the neutral position setting completion indicator 88 of the operation terminal 80 at S28 to end execution of the program.

ii) Motion Position Hold Processing

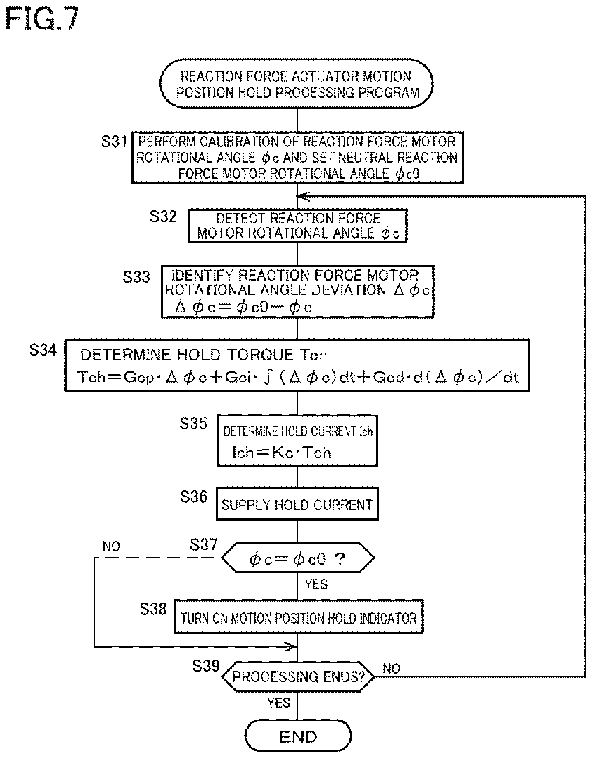

The motion position hold processing for the reaction force actuator 12 is executed when the handle 10 is attached to the steering shaft 22 after the neutral position setting processing is executed. The motion position hold processing is executed such that the reaction force ECU 40 executes a reaction force actuator motion position hold processing program of a flowchart of Fig. 7, triggered by the worker's operation of the operation terminal 80.

In the processing according to the program, the reaction force ECU 40 performs, at S31, calibration of the reaction force motor rotational angle $\varphi c$ detected by the reaction force motor rotational angle sensor 54. Specifically, the reaction force ECU 40 sets the reaction force motor rotational angle $\varphi c$ corresponding to the neutral operation angle $\delta 0$ to the neutral reaction force motor rotational angle $\varphi c0$. The calibration allows the reaction force motor rotational angle $\varphi c$ to be based on the neutral reaction force motor rotational angle $\varphi c0$.

At S32, the reaction force ECU 40 causes the reaction force motor rotational angle sensor 54 to detect the reaction force motor rotational angle $\varphi c$ at the present time point. At S33, the reaction force ECU 40 sets the target reaction force motor rotational angle $\varphi c^*$ as the neutral reaction force motor rotational angle $\varphi c0$ and identifies, according to the following expression, a reaction force motor rotational angle deviation $\Delta \varphi c$, which is a deviation of the reaction force motor rotational angle $\varphi c$ detected by the reaction force motor rotational angle sensor 54 with respect to the neutral reaction force motor rotational angle $\varphi c0$:

$$\Delta \phi c = \phi c0 - \phi c$$

At S34, the reaction force ECU 40 determines a hold torque Tch, which is a torque of the reaction force motor 24 for holding the steering shaft 22 at the neutral operation angle $\delta 0$, based on the reaction force motor rotational angle deviation $\Delta \varphi c$ according to the PID feedback control law. Specifically, the reaction force ECU 40 determines the hold torque Tch according to the following expression:

$$Tch = Gcp \cdot \Delta \phi c + Gci \cdot \int (\Delta \phi c) \, dt + Gcd \cdot d (\Delta \phi c) / dt$$

In the above expression, "Gcp", "Gci", and "Gcd" are a proportional term gain, an integral term gain, and a derivative term gain.

Based on the hold torque Tch, the reaction force ECU 40 determines, at S35, a hold current Ich to be supplied to the reaction force motor 24 according to the following expression:

$$Ich = Kc \cdot Tch$$

At S36, the hold current Ich is supplied from the inverter to the reaction force motor 24.

At S37, the reaction force ECU 40 determines whether the reaction force motor rotational angle $\varphi c$ is kept at the neutral reaction force motor rotational angle $\varphi c0$. When the reaction force motor rotational angle $\varphi c$ is kept at the neutral reaction force motor rotational angle $\varphi c0$, the control flow proceeds to S38 at which the reaction force ECU 40 turns on the motion position hold indicator 90 of the operation terminal 80. At S39, the reaction force ECU 40 determines whether a signal to complete the motion position hold processing is input from the operation terminal 80. When the reaction force ECU 40 determines that the signal is not input, the reaction force ECU 40 repeats S32-S38. When the worker performs a switch operation to complete the motion position hold processing after the handle 10 is attached, for instance, the reaction force ECU 40 determines that the signal to complete the motion position hold processing is input and ends the processing.

(b) Processings for Steering Actuator

i) Neutral Position Setting Processing

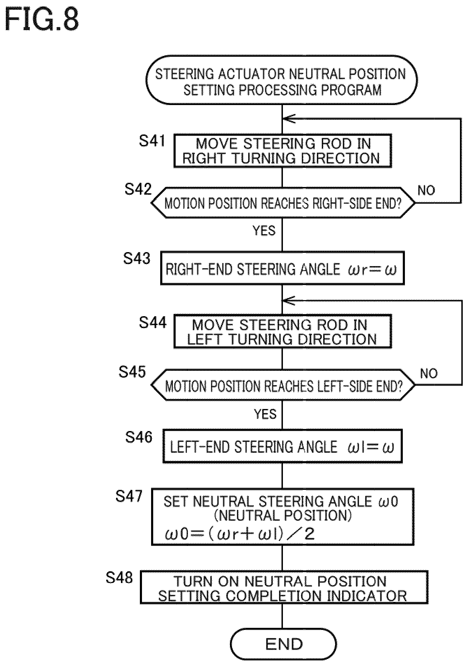

The neutral position setting processing for the steering actuator 16 is executed in a state in which the wheels 14 are connected to the steering actuator 16 and the toe angle of the wheels 14 is not adjusted, for instance. The neutral position setting processing is executed such that the steering ECU 42 executes a steering actuator neutral position setting processing program of a flowchart of Fig. 8, triggered by the worker's operation of the operation terminal 80.

In the processing according to the neutral position setting processing program, at S41, the steering ECU 42 supplies a current to the steering motor 38 to rotate the steering rod 32 in a direction in which the vehicle turns to the right. At S42, when the ring 74L is stopped by the left end of the housing 30 and it is accordingly determined that the movement of the steering rod 32 is prohibited, namely, when it is determined that the motion position of the steering actuator 16 reaches the right-side end of the motion range, the control flow proceeds to S43 at which the steering ECU 42 sets the steering angle ω detected by the steering angle sensor 56 as a right-end steering angle ωr.

At S44, the steering ECU 42 supplies a current in the opposite direction to the steering motor 38 to move the steering rod 32 in a direction in which the vehicle turns to the left. At S45, when the ring 74R is stopped by the right end of the housing 30 and it is accordingly determined that the movement of the steering rod 32 is prohibited, namely, when the motion position of the steering actuator 16 is located at the left-side end of the motion range, the control flow proceeds to S46 at which the steering ECU 42 sets the steering angle ω detected by the steering angle sensor 56 as a left-end steering angle ωl.

At S47, the steering ECU 42 sets, as a neutral steering angle ω0, the steering angle ω middle between the right-end steering angle ωr and the left-end steering angle ωl according to the following expression:

$$\omega 0 = (\omega r + \omega l) / 2$$

The neutral steering angle ω0 is the neutral position of the motion range of the steering actuator 16. Based on the setting, calibration of the steering angle ω is performed. The steering angle ω, which is based on the neutral steering angle ω0, is thereafter used. After the setting of the neutral steering angle ω0 is ended, namely, after the setting of the neutral position is ended, the steering ECU 42 turns on the neutral position setting completion indicator 88 of the operation terminal 80 at S48 to end the execution of the program.

ii) Motion Position Hold Processing

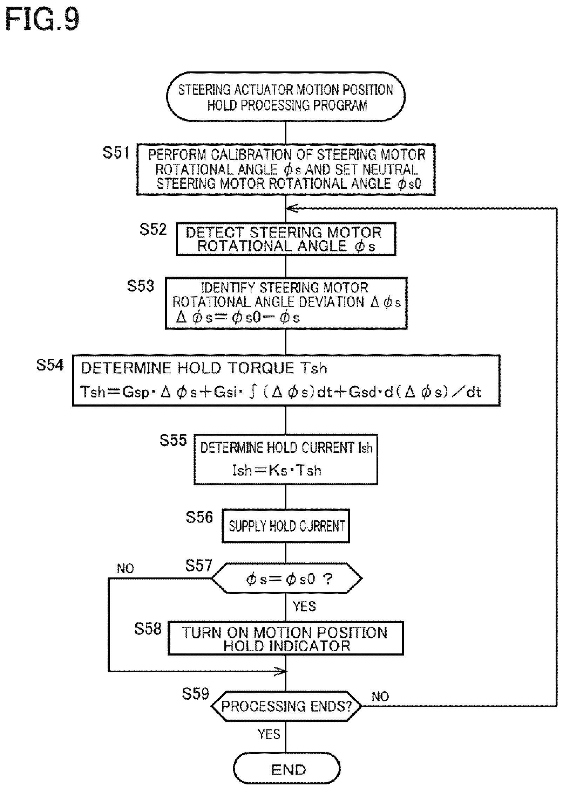

The motion position hold processing for the steering actuator 16 is executed when the toe angle of the wheels 14 is adjusted after the neutral position setting processing is executed. The motion position hold processing is executed such that the steering ECU 42 executes a steering actuator motion position hold processing program of a flowchart of Fig. 9, triggered by the worker's operation of the operation terminal 80.

In the processing according to the program, the steering ECU 42 performs, at S51, calibration of the steering motor rotational angle φs detected by the steering motor rotational angle sensor 62. Specifically, the steering ECU 42 sets the steering motor rotational angle φs corresponding to the neutral steering angle ω0 to the neutral steering motor rotational angle φs0. The calibration allows the steering motor rotational angle φs to be based on the neutral steering motor rotational angle φs0.

At S52, the steering ECU 42 causes the steering motor rotational angle sensor 62 to detect the steering motor rotational angle φs at the present time point. At S53, the steering ECU 42 sets the target steering motor rotational angle φs* as the neutral steering motor rotational angle φs0 and identifies, according to the following expression, a steering motor rotational angle deviation Δφs, which is a deviation of the steering motor rotational angle φs detected by the steering motor rotational angle sensor 62 with respect to the neutral steering motor rotational angle φs0:

$$\Delta\phi s = \phi s0 - \phi s$$

At S54, the steering ECU 42 determines a hold torque Tsh, which is a torque of the steering motor 38 for holding the steering rod 32 at the neutral steering angle ω0, based on the steering motor rotational angle deviation Δφs according to the PID feedback control law. Specifically, the steering ECU 42 determines the hold torque Tch according to the following expression:

$$Tsh = Gsp \cdot \Delta\phi s + Gsi \cdot \int (\Delta\phi s) \, dt + Gsd \cdot d \, (\Delta\phi s) / dt$$

Based on the hold torque Tsh, the steering ECU 42 determines, at S55, a hold current Ish to be supplied to the steering motor 38 according to the following expression:

$$Ish = Ks \cdot Tsh$$

At S56, the hold current Ish is supplied from the inverter to the steering motor 38.

At S57, the steering ECU 42 determines whether the steering motor rotational angle φs is kept at the neutral steering motor rotational angle φs0. When the steering motor rotational angle φs is kept at the neutral steering motor rotational angle φs0, the control flow proceeds to S58 at which the steering ECU 42 turns on the motion position hold indicator 90 of the operation terminal 80. At S59, the steering ECU 42 determines whether a signal to complete the motion position hold processing is input from the operation terminal 80. When the steering ECU 42 determines that the signal is not input, the steering ECU 42 repeats S52-S58. When the worker performs a switch operation to complete the motion position hold processing after the adjustment of the toe angle of the wheels 14 is completed, for instance, the steering ECU 42 determines that the signal to complete the motion position hold processing is input and ends the processing.

**Claims**

1. A steer-by-wire steering system for a vehicle, comprising:

   a reaction force actuator (12) to which an operation member (10) is connected such that the reaction force actuator is moved by the operation member (10), the reaction force actuator including a power source (24) by which the reaction force actuator applies an operation reaction force to the operation member;
   a steering actuator (16) to which a wheel (14) is connected, the steering actuator including a power source (38) by which the steering actuator (16) steers the wheel; and
   a controller (40, 42) configured to control the reaction force actuator and the steering actuator,
   wherein the controller is configured to be able to execute, for each of the reaction force actuator and the steering actuator, a neutral position setting processing of setting a neutral position in a motion range and a motion position hold processing of holding a motion position at the neutral position by the power source,
   wherein, in a state in which an operation terminal (80) is connected to the controller (40, 42), the controller executes the neutral position setting processing and the motion position hold processing based on a signal from the operation terminal, the operation terminal (80) includes an actuator selecting switch (82) to select for which one of the reaction force actuator (12) and the steering actuator (16) the processing is executed.

2. The steer-by-wire steering system according to claim 1, wherein the neutral position is the motion position to be maintained when the vehicle travels straight.

3. The steer-by-wire steering system according to any one of claims 1 or 2,

   wherein each of the reaction force actuator (12) and the steering actuator (16) includes a movable member (22, 32) that is movable in accordance with the motion position and a pair of stoppers (72L, 72R; 74L, 74R) configured to stop the movable member to define one end and the other end of the motion range, and
   wherein, in the neutral position setting processing,

   the controller (40, 42) obtains a motion position corresponding to the one end of the motion range and a motion position corresponding to the other end of the motion range by moving the movable member by the power source (24, 38) such that the movable member is stopped by the pair of stoppers, and
   the controller sets a position middle between the motion positions as the neutral position.

4. The steer-by-wire steering system according to any one of claims 1-3,

   wherein the power source (24, 38) is an electric motor, and
   wherein, in the motion position hold processing, a current for holding the motion position at the neutral position is kept supplied to the electric motor.

5. The steer-by-wire steering system according to any one claims 1-4,

   wherein the controller (40, 42) executes the neutral position setting processing and the motion position hold processing for the reaction force actuator (12), and
   wherein the controller is configured to be capable of executing the motion position hold processing in a connecting work of connecting the operation member (10) to the reaction force actuator.

6. The steer-by-wire steering system according to any one of claims 1-5,

   wherein the controller (40, 42) executes the neutral position setting processing and the motion position hold processing for the steering actuator (16), and
   wherein the controller is configured to be capable of executing the motion position hold processing in an adjusting work of adjusting alignment of the wheel (14) connected to the steering actuator.

7. The steer-by-wire steering system according to any one of claims 1-6, wherein, when the motion position hold processing is being executed, the controller (40, 42) transmits, to the operation terminal (80), a signal indicating that the motion position hold processing is being executed.

**Patentansprüche**

1. Steer-by-Wire-Lenksystem für ein Fahrzeug mit:

   einem Reaktionskraftaktuator (12), mit dem ein Betätigungselement (10) derart verbunden ist, dass der Reaktionskraftaktuator durch das Betätigungselement (10) bewegt wird, wobei der Reaktionskraftaktuator eine Energiequelle (24) aufweist, durch die der Reaktionskraftaktuator eine Betätigungsreaktionskraft auf das Betätigungselement ausübt;
   einem Lenkaktuator (16), mit dem ein Rad (14) verbunden ist, wobei der Lenkaktuator eine Energiequelle (38) aufweist, durch die der Lenkaktuator (16) das Rad lenkt; und
   einer Steuerung (40, 42), die konfiguriert ist, um den Reaktionskraftaktuator und den Lenkaktuator zu steuern, wobei die Steuerung konfiguriert ist, um in der Lage zu sein, für jeden von dem Reaktionskraftaktuator und dem Lenkaktuator eine Neutralpositionseinstellverarbeitung zum Einstellen einer Neutralposition in einem Bewegungsbereich und eine Bewegungspositionshalteverarbeitung zum Halten einer Bewegungsposition an der Neutralposition durch die Energiequelle auszuführen, und
   wobei in einem Zustand, in dem ein Betätigungsterminal (80) mit der Steuerung (40, 42) verbunden ist, die Steuerung die Neutralpositionseinstellverarbeitung und die Bewegungspositionshalteverarbeitung basierend auf einem Signal von dem Betätigungsterminal ausführt, wobei das Betätigungsterminal (80) einen Aktuatorauswahlschalter (82) aufweist, um auszuwählen, für welchen von dem Reaktionskraftaktuator (12) und dem Lenkaktuator (16) die Verarbeitung ausgeführt wird.

2. Steer-by-Wire-Lenksystem nach Anspruch 1, wobei die Neutralposition die Bewegungsposition ist, die beizubehalten ist, wenn das Fahrzeug geradeaus fährt.

3. Steer-by-Wire-Lenksystem nach einem der Ansprüche 1 oder 2,

   wobei jeder von dem Reaktionskraftaktuator (12) und dem Lenkaktuator (16) ein bewegliches Element (22, 32), das gemäß der Bewegungsposition beweglich ist, und ein Paar Anschläge (72L, 72R; 74L, 74R) aufweist, die konfiguriert sind, um das bewegliche Element anzuhalten, um ein Ende und das andere Ende des Bewegungsbereichs zu definieren, und
   wobei in der Neutralpositionseinstellverarbeitung

   die Steuerung (40, 42) eine Bewegungsposition, die dem einen Ende des Bewegungsbereichs entspricht, und eine Bewegungsposition, die dem anderen Ende des Bewegungsbereichs entspricht, durch Bewegen des beweglichen Elements durch die Energiequelle (24, 38) derart erhält, dass das bewegliche Element durch das Paar Anschläge angehalten wird, und
   die Steuerung eine Positionsmitte zwischen den Bewegungspositionen als die Neutralposition einstellt.

4. Steer-by-Wire-Lenksystem nach einem der Ansprüche 1 bis 3,

   wobei die Energiequelle (24, 38) ein Elektromotor ist und
   wobei in der Bewegungspositionshalteverarbeitung ein Strom zum Halten der Bewegungsposition an der Neutralposition weiter dem Elektromotor zugeführt wird.

5. Steer-by-Wire-Lenksystem nach einem der Ansprüche 1 bis 4,

   wobei die Steuerung (40, 42) die Neutralpositionseinstellverarbeitung und die Bewegungspositionshalteverarbeitung für den Reaktionskraftaktuator (12) ausführt und
   wobei die Steuerung konfiguriert ist, um in der Lage zu sein, die Bewegungspositionshalteverarbeitung in einer Verbindungsarbeit zum Verbinden des Betätigungselements (10) mit dem Reaktionskraftaktuator auszuführen.

6. Steer-by-Wire-Lenksystem nach einem der Ansprüche 1 bis 5,

   wobei die Steuerung (40, 42) die Neutralpositionseinstellverarbeitung und die Bewegungspositionshalteverarbeitung für den Lenkaktuator (16) ausführt und

wobei die Steuerung konfiguriert ist, um in der Lage zu sein, die Bewegungspositionshalteverarbeitung in einer Einstellarbeit zum Einstellen der Ausrichtung des Rads (14), das mit dem Lenkaktuator verbunden ist, auszuführen.

**7.** Steer-by-Wire-Lenksystem nach einem der Ansprüche 1 bis 6, wobei, wenn die Bewegungspositionshalteverarbeitung ausgeführt wird, die Steuerung (40, 42) an das Betätigungsterminal (80) ein Signal überträgt, das anzeigt, dass die Bewegungspositionshalteverarbeitung ausgeführt wird.

## Revendications

**1.** Système de direction à commande électrique pour un véhicule, comprenant :

un actionneur de force de réaction (12), auquel un élément de commande (10) est relié de sorte que l'actionneur de force de réaction soit déplacé par l'élément de commande (10), l'actionneur de force de réaction incluant une source d'énergie (24), par laquelle l'actionneur de force de réaction applique une force de réaction de commande à l'élément de commande ;

un actionneur de direction (16), auquel une roue (14) est reliée, l'actionneur de direction comprenant une source d'énergie (38), par laquelle l'actionneur de direction (16) dirige la roue ; et

un dispositif de commande (40, 42) configuré pour commander l'actionneur de force de réaction et l'actionneur de direction,

dans lequel le dispositif de commande est configuré pour pouvoir exécuter, pour chacun de l'actionneur de force de réaction et de l'actionneur de direction, un traitement de réglage de position neutre consistant à définir une position neutre dans une plage de mouvement et un traitement de maintien de position de mouvement consistant à maintenir une position de mouvement à la position neutre par la source d'énergie,

dans lequel dans un état, dans lequel un terminal de commande (80) est relié au dispositif de commande (40, 42), le dispositif de commande exécute le traitement de réglage de position neutre et le traitement de maintien de position de mouvement sur la base d'un signal provenant du terminal de commande, le terminal de commande (80) comprend un commutateur de sélection d'actionneur (82) pour sélectionner l'actionneur parmi l'actionneur de force de réaction (12) et l'actionneur de direction (16) pour lequel le traitement est exécuté.

**2.** Système de direction à commande électrique selon la revendication 1, dans lequel la position neutre est la position de mouvement à maintenir lorsque le véhicule se déplace en ligne droite.

**3.** Système de direction électrique selon l'une quelconque des revendications 1 ou 2,

dans lequel chacun de l'actionneur de force de réaction (12) et de l'actionneur de direction (16) inclut un élément mobile (22, 32) qui se déplace en fonction de la position de mouvement et une paire de butées (72L, 72R ; 74L, 74R) configurées pour arrêter l'élément mobile afin de définir une extrémité et l'autre extrémité de la plage de mouvement, et

dans lequel dans le traitement de réglage de position neutre,

le dispositif de commande (40, 42) obtient une position de mouvement correspondant à l'une extrémité de la plage de mouvement et une position de mouvement correspondant à l'autre extrémité de la plage de mouvement en déplaçant l'élément mobile par la source d'énergie (24, 38) de sorte que l'élément mobile soit arrêté par la paire de butées, et

le dispositif de commande définit une position intermédiaire entre les positions de mouvement comme position neutre.

**4.** Système de direction à commande électrique selon l'une quelconque des revendications 1-3,

dans lequel la source d'énergie (24, 38) est un moteur électrique, et

dans lequel lors du traitement de maintien de position de mouvement, un courant est fourni au moteur électrique pour maintenir la position de mouvement en position neutre.

**5.** Système de direction à commande électrique selon l'une quelconque des revendications 1-4,

dans lequel le dispositif de commande (40, 42) exécute le traitement de réglage de position neutre et le traitement de maintien de position de mouvement pour l'actionneur de force de réaction (12), et

dans lequel le dispositif de commande est configuré pour pouvoir exécuter le traitement de maintien de position de mouvement dans un travail de liaison reliant l'élément d'opération (10) à l'actionneur de force de réaction.

6. Système de direction à commande électrique selon l'une quelconque des revendications 1-5,

dans lequel le dispositif de commande (40, 42) exécute le traitement de réglage de position neutre et le traitement de maintien de position de mouvement pour l'actionneur de direction (16), et

dans lequel le dispositif de commande est configuré pour pouvoir exécuter le traitement de maintien de position de mouvement dans un travail de réglage de l'alignement de la roue (14) reliée à l'actionneur de direction.

7. Système de direction à commande électrique selon l'une quelconque des revendications 1-6, dans lequel lorsque le traitement de maintien de position de mouvement est en cours d'exécution, le dispositif de commande (40, 42) transmet, au terminal de commande (80), un signal indiquant que le traitement de maintien de position de mouvement est en cours d'exécution.

# FIG.1

EP 4 403 439 B1

# FIG.2

```
        ( STEERING CONTROL PROGRAM )
                      |
S1   OBTAIN OPERATION
       ANGLE δ
                      |
S2   DETERMINE TARGET
     STEERING ANGLE ω*
     ω*=Ns・δ
                      |
S3   DETERMINE TARGET STEERING
     MOTOR ROTATIONAL ANGLE φs*
     φs*=Nms・ω*
                      |
S4   DETECT ACTUAL STEERING
     MOTOR ROTATIONAL ANGLE φs
                      |
S5     IDENTIFY STEERING MOTOR
     ROTATIONAL ANGLE DEVIATION Δφs
     Δφs=φs*−φs
                      |
S6   DETERMINE STEERING TORQUE Ts
     Ts=Gsp・Δφs+Gsi・∫(Δφs)dt+Gsd・d(Δφs)／dt
                      |
S7   DETERMINE STEERING
       CURRENT Is
     Is=Ks・Ts
                      |
S8   SUPPLY STEERING
       CURRENT Is
                      |
S9   TRANSMIT STEERING
       CURRENT SIGNAL
                      |
              ( END )
```

# FIG.3

```
           ┌────────────────────────┐
           │    REACTION FORCE       │
           │   CONTROL PROGRAM       │
           └────────────────────────┘
                        │
    S11    ┌────────────────────────────┐
           │   DETECT REACTION FORCE     │
           │ MOTOR ROTATIONAL ANGLE φc   │
           └────────────────────────────┘
                        │
    S12       ┌──────────────────────┐
              │  IDENTIFY OPERATION   │
              │      ANGLE δ          │
              │   δ＝Nmc・φc          │
              └──────────────────────┘
                        │
    S13       ┌──────────────────────┐
              │  TRANSMIT OPERATION   │
              │    ANGLE SIGNAL       │
              └──────────────────────┘
                        │
    S14    ┌────────────────────────────┐
           │ DETERMINE NEUTRAL POSITION  │
           │  RETURN COMPONENT Tcc       │
           │   Tcc＝Cc・δ               │
           └────────────────────────────┘
                        │
    S15       ┌──────────────────────┐
              │  OBTAIN STEERING      │
              │    CURRENT Is         │
              └──────────────────────┘
                        │
    S16   ┌──────────────────────────────────┐
          │ DETERMINE STEERING-LOAD-DEPENDENT │
          │        COMPONENT Tcs              │
          │       Tcs＝Cs・Is                │
          └──────────────────────────────────┘
                        │
    S17       ┌──────────────────────┐
              │  DETERMINE REACTION   │
              │    FORCE TORQUE       │
              │    Tc＝Tcc＋Tcs       │
              └──────────────────────┘
                        │
    S18       ┌──────────────────────┐
              │  DETERMINE REACTION   │
              │    FORCE CURRENT      │
              │     Ic＝Kc・Tc        │
              └──────────────────────┘
                        │
    S19       ┌──────────────────────┐
              │  SUPPLY REACTION      │
              │    FORCE CURRENT      │
              └──────────────────────┘
                        │
              ┌──────────────────────┐
              │         END          │
              └──────────────────────┘
```

The steps are:

- **S11**: DETECT REACTION FORCE MOTOR ROTATIONAL ANGLE $\phi c$
- **S12**: IDENTIFY OPERATION ANGLE $\delta$ $\quad \delta = Nmc \cdot \phi c$
- **S13**: TRANSMIT OPERATION ANGLE SIGNAL
- **S14**: DETERMINE NEUTRAL POSITION RETURN COMPONENT $Tcc$ $\quad Tcc = Cc \cdot \delta$
- **S15**: OBTAIN STEERING CURRENT $Is$
- **S16**: DETERMINE STEERING-LOAD-DEPENDENT COMPONENT $Tcs$ $\quad Tcs = Cs \cdot Is$
- **S17**: DETERMINE REACTION FORCE TORQUE $\quad Tc = Tcc + Tcs$
- **S18**: DETERMINE REACTION FORCE CURRENT $\quad Ic = Kc \cdot Tc$
- **S19**: SUPPLY REACTION FORCE CURRENT

FIG.4A

FIG.4B

FIG.5A

FIG.5B

## FIG.6

```
        ╭──────────────────────────────────────╮
        │  REACTION FORCE ACTUATOR  NEUTRAL    │
        │ POSITION SETTING PROCESSING PROGRAM  │
        ╰──────────────────────────────────────╯
                          │
                          ▼ ◄──────────────────────┐
S21 ┌──────────────────────────────────────┐       │
    │   ROTATE STEERING SHAFT IN RIGHT      │       │
    │           TURNING DIRECTION           │       │
    └──────────────────────────────────────┘       │
                          │                         │
S22          ╱─────────────────────────╲    NO      │
           ╱   MOTION POSITION REACHES   ╲──────────┘
           ╲       RIGHT-SIDE END?       ╱
             ╲─────────────────────────╱
                          │ YES
                          ▼
S23 ┌──────────────────────────────────────┐
    │   RIGHT-END OPERATION ANGLE  δr=δ     │
    └──────────────────────────────────────┘
                          │
                          ▼ ◄──────────────────────┐
S24 ┌──────────────────────────────────────┐       │
    │ ROTATE STEERING SHAFT IN LEFT TURNING │       │
    │              DIRECTION                │       │
    └──────────────────────────────────────┘       │
                          │                         │
S25          ╱─────────────────────────╲    NO      │
           ╱ MOTION POSITION REACHES     ╲──────────┘
           ╲    LEFT-SIDE END?           ╱
             ╲─────────────────────────╱
                          │ YES
                          ▼
S26 ┌──────────────────────────────────────┐
    │  LEFT-END OPERATION ANGLE  δl=δ       │
    └──────────────────────────────────────┘
                          │
                          ▼
S27 ┌──────────────────────────────────────┐
    │        SET NEUTRAL OPERATION          │
    │   ANGLE  δ0 (NEUTRAL POSITION)        │
    │         δ0=(δr+δl)/2                   │
    └──────────────────────────────────────┘
                          │
                          ▼
S28 ┌──────────────────────────────────────┐
    │   TURN ON NEUTRAL POSITION SETTING    │
    │         COMPLETION INDICATOR          │
    └──────────────────────────────────────┘
                          │
                          ▼
                  ╭───────────────╮
                  │      END      │
                  ╰───────────────╯
```

# FIG.7

REACTION FORCE ACTUATOR MOTION
POSITION HOLD PROCESSING PROGRAM

S31 PERFORM CALIBRATION OF REACTION FORCE MOTOR
ROTATIONAL ANGLE $\phi c$ AND SET NEUTRAL REACTION
FORCE MOTOR ROTATIONAL ANGLE $\phi c0$

S32 DETECT REACTION FORCE
MOTOR ROTATIONAL ANGLE $\phi c$

S33 IDENTIFY REACTION FORCE MOTOR
ROTATIONAL ANGLE DEVIATION $\Delta \phi c$
$\Delta \phi c = \phi c0 - \phi c$

S34 DETERMINE HOLD TORQUE Tch
$Tch = Gcp \cdot \Delta \phi c + Gci \cdot \int (\Delta \phi c) dt + Gcd \cdot d (\Delta \phi c) / dt$

S35 DETERMINE HOLD CURRENT Ich
$Ich = Kc \cdot Tch$

S36 SUPPLY HOLD CURRENT

NO S37 $\phi c = \phi c0$ ?

YES

S38 TURN ON MOTION POSITION HOLD INDICATOR

S39 PROCESSING ENDS? NO

YES

END

22

# FIG.8

STEERING ACTUATOR NEUTRAL POSITION
SETTING PROCESSING PROGRAM

S41　MOVE STEERING ROD IN
RIGHT TURNING DIRECTION

S42　MOTION POSITION REACHES RIGHT-SIDE END?　NO

YES

S43　RIGHT-END STEERING ANGLE $\omega r = \omega$

S44　MOVE STEERING ROD IN
LEFT TURNING DIRECTION

S45　MOTION POSITION REACHES LEFT-SIDE END?　NO

YES

S46　LEFT-END STEERING ANGLE $\omega l = \omega$

S47　SET NEUTRAL STEERING ANGLE $\omega 0$
(NEUTRAL POSITION)
$\omega 0 = (\omega r + \omega l) / 2$

S48　TURN ON NEUTRAL POSITION
SETTING COMPLETION INDICATOR

END

# FIG.9

STEERING ACTUATOR MOTION POSITION
HOLD PROCESSING PROGRAM

S51 PERFORM CALIBRATION OF STEERING MOTOR
ROTATIONAL ANGLE $\phi$s AND SET NEUTRAL
STEERING MOTOR ROTATIONAL ANGLE $\phi$s0

S52 DETECT STEERING MOTOR
ROTATIONAL ANGLE $\phi$s

S53 IDENTIFY STEERING MOTOR
ROTATIONAL ANGLE DEVIATION $\Delta\phi$s
$\Delta\phi$s$=\phi$s0$-\phi$s

S54 DETERMINE HOLD TORQUE Tsh
Tsh$=$Gsp$\cdot\Delta\phi$s$+$Gsi$\cdot\int(\Delta\phi$s$)$dt$+$Gsd$\cdot$d$(\Delta\phi$s$)\diagup$dt

S55 DETERMINE HOLD CURRENT Ish
Ish$=$Ks$\cdot$Tsh

S56 SUPPLY HOLD CURRENT

NO
S57 $\phi$s$=\phi$s0 ?

YES

S58 TURN ON MOTION POSITION
HOLD INDICATOR

S59 PROCESSING ENDS? NO

YES

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022018938 A
- FR 3117986 A
- US 2018141584 A1
- US 2012061171 A1